# EUROPEAN PATENT APPLICATION

(11) **EP 4 258 270 A1**
(43) Date of publication of application: **11.10.2023**
(21) Application number: 22870233.8
(22) Date of filing: 13.09.2022
(51) Int. Cl.: G16C 20/30, G16C 20/60, G16C 20/70, C07C 37/00, C07C 39/16, B01D 46/02

(54) **APPARATUS AND METHOD FOR PREDICTING AMOUNT OF DUST**

(30) Priority: 15.09.2021 KR 20210123536
(71) Applicant: Lg Chem, Ltd., Seoul 07336 (KR)
(72) Inventor: JO, Pil-Sung, Daejeon 34122 (KR); NAM, Seung-Han, Daejeon 34122 (KR); CHOE, Jin-Hyeok, Daejeon 34122 (KR); KIM, Min-Ki, Daejeon 34122 (KR); SEO, Hong-Kyu, Daejeon 34122 (KR); LEE, Chang-Song, Daejeon 34122 (KR)
(74) Representative: Goddar, Heinz J.
(86) International application number: PCT/KR2022/013635
(87) International publication number: WO 2023/043149

(57) **Abstract**

Disclosed is a dust amount estimating apparatus, which estimates the amount of dust generated in a processing process for generating BPA prills from liquid BPA introduced into a prill tower, the dust amount estimating apparatus including a fine particle amount estimating unit configured to estimate the amount of fine particles generated in the processing process from flow rate information of the liquid BPA introduced into the prill tower using a learned fine particle amount estimating model; and a dust amount estimating unit configured to estimate the amount of dust generated in the processing process from the amount of fine particles estimated by the fine particle amount estimating unit using a learned dust amount estimating model.

## Description

### TECHNICAL FIELD

The present application claims priority to Korean Patent Application No. 10-2021-0123536 filed on September 15, 2021 in the Republic of Korea, the disclosures of which are incorporated herein by reference.

The present disclosure relates to a dust amount estimating apparatus and method, and more particularly, to a dust amount estimating apparatus and method capable of estimating the amount of dust generated in a BPA prill manufacturing process.

### BACKGROUND ART

In general, dust generated in the process of generating BPA (Bisphenol-A) prills through a prill tower may be stored in a dust filter. The dust filter may include a bag filter through which the dust introduced from the prill tower is filtered and a dust box in which the dust is finally stored.

The dust stored in the dust filter is a combustible material, and if a certain amount of dust or more is dispersed within a certain space, static electricity that can act as an ignition source may accumulate. That is, if oxygen, static electricity (ignition source), and dust (combustible material) are present in the bag filter at a certain level or higher, there is a risk that the bag filter may catch fire or explode. Therefore, it is important to check the amount of dust stored in the bag filter to detect unexpected accidents in advance.

For example, in the prior art, the dust box of the dust filter is replaced at regular intervals, and the amount of dust stored in the dust box during the corresponding period is confirmed ex post facto. However, this conventional method has a problem in that the amount of dust stored in the dust filter cannot be checked in real time.

As another example, conventionally, the dust filter is equipped with a sensor for detecting the amount of dust to confirm the amount of dust. However, this conventional method has a problem in that the manufacturing cost of the BPA prill generating apparatus increases because the sensor for detecting the amount of dust must be necessarily provided.

### DISCLOSURE

### Technical Problem

The present disclosure is designed to solve the problems of the related art, and therefore the present disclosure is directed to providing a dust amount estimating apparatus and method that estimates the amount of dust generated during a BPA prill production process in real time using a learned model.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

A dust amount estimating apparatus according to one aspect of the present disclosure estimates the amount of dust generated in a processing process for generating BPA prills from liquid BPA introduced into a prill tower, and the dust amount estimating apparatus may comprise: a fine particle amount estimating unit configured to estimate the amount of fine particles generated in the processing process from flow rate information of the liquid BPA introduced into the prill tower using a learned fine particle amount estimating model; and a dust amount estimating unit configured to estimate the amount of dust generated in the processing process from the amount of fine particles estimated by the fine particle amount estimating unit using a learned dust amount estimating model.

The fine particle amount estimating model may be pre-learned to estimate the amount of fine particles that are capable of being generated from the liquid BPA, based on the flow rate information of the liquid BPA introduced into the prill tower and a preset fine particle amount generation rate.

The fine particle amount generation rate may be preset to indicate the corresponding relationship between the amount of the liquid BPA and the amount of fine particles generated from the liquid BPA.

The fine particle amount estimating model may be pre-learned to estimate the amount of fine particles by further considering at least one of characteristic information of the liquid BPA introduced into the prill tower and a process condition factor of the prill tower.

The fine particle amount estimating unit may be configured to determine the fine particle amount generation rate corresponding to at least one of the characteristic information of the liquid BPA and the process condition factor, and estimate the amount of fine particles based on the determined fine particle amount generation rate.

The characteristic information of the liquid BPA may be configured to include at least one of temperature information and composition information of the liquid BPA.

The process condition factor may be configured to include at least one of a speed at which the liquid BPA introduced into the prill tower is injected into the prill tower, a speed at which the BPA prills and the fine particles generated in the processing process are output from the prill tower to the outside, an amount of refrigerant introduced into the prill tower in the processing process, a temperature of the refrigerant, an internal temperature of the prill tower, and a pressure difference between a dust filter in which the dust is stored and the inside of the prill tower.

The dust amount estimating model may be pre-learned to estimate the amount of dust from the estimated amount of fine particles, based on a preset correlation between the amount of fine particles and the amount of dust.

The correlation may be configured to be preset based on the corresponding relationship between the amount of fine particles and the amount of dust generated from the liquid BPA.

The liquid BPA may be configured to be introduced into the prill tower in the processing process and generate the BPA prills, the fine particles and the dust.

The dust amount estimating apparatus according to another aspect of the present disclosure may further comprise a risk determining unit configured to diagnose the state of a dust filter based on the amount of oxygen and the amount of static electricity of the dust filter in which the dust generated in the processing process is stored and the amount of dust estimated by the dust amount estimating unit.

The risk determining unit may be configured to determine the state of the dust filter as a normal state or an abnormal state and output a warning notification when the determined state of the dust filter is the abnormal state.

A BPA prill manufacturing apparatus according to still another aspect of the present disclosure may comprise the dust amount estimating apparatus according to an aspect of the present disclosure.

A dust estimating method according to still another aspect of the present disclosure estimates the amount of dust generated in a processing process for generating BPA prills from liquid BPA introduced into a prill tower, and the dust amount estimating method may comprise: a fine particle amount estimating step of estimating the amount of fine particles generated in the processing process from flow rate information and characteristic information of the liquid BPA introduced into the prill tower and a process condition factor of the prill tower using a learned fine particle amount estimating model; and a dust amount estimating step of estimating the amount of dust generated in the processing process from the amount of fine particles estimated in the fine particle amount estimating step using a learned dust amount estimating model.

### Advantageous Effects

According to one aspect of the present disclosure, there is an advantage in that the amount of dust generated during the BPA prill production process may be estimated in real time based on the learned model.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a BPA prill generating apparatus for generating BPA prills from liquid BPA.
FIG. 2 is a diagram schematically showing a dust amount estimating apparatus according to an embodiment of the present disclosure.
FIG. 3 is a diagram schematically showing the amount of fine particles and the amount of dust generated from the liquid BPA.
FIG. 4 is a diagram schematically showing an operating configuration of the dust amount estimating apparatus according to an embodiment of the present disclosure.
FIG. 5 is a diagram schematically showing a phase transition process of the liquid BPA in a BPA prill processing process.
FIG. 6 is a diagram schematically showing a phase transition process of the liquid BPA when the temperature of the liquid BPA in FIG. 5 is changed.
FIG. 7 is a diagram schematically showing a phase transition process of the liquid BPA when the composition of the liquid BPA in FIG. 5 is changed.
FIG. 8 is a diagram schematically showing the amount of dust estimated by the dust amount estimating apparatus according to an embodiment of the present disclosure.
FIG. 9 is a diagram schematically showing a dust amount estimating method according to another embodiment of the present disclosure.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

Hereinafter, preferred embodiments of the present disclosure will be described in detail with reference to the accompanying drawings.

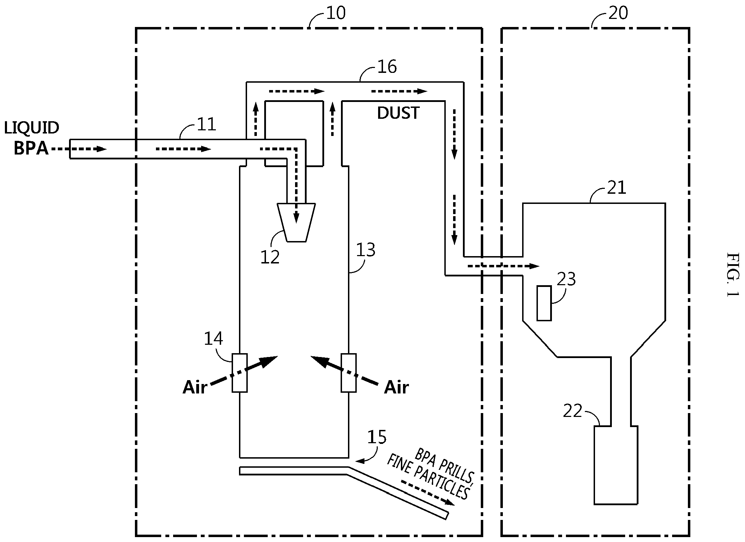

FIG. 1 is a diagram schematically showing a BPA prill generating apparatus for generating BPA prills from liquid BPA.

Here, the liquid BPA (Bisphenol-A) is molten BPA, which may be configured to be introduced into a prill tower 10 in the processing process and generate BPA prills, fine particles, and dust.

Referring to FIG. 1, the BPA prill generating apparatus may include a prill tower 10 and a dust filter 20. The prill tower 10 may include a BPA input unit 11, a BPA discharge unit 12, a body unit 13, a refrigerant input unit 14, a BPA output unit 15, and a dust output unit 16.

The BPA input unit 11 may be configured to introduce liquid BPA. For example, in the embodiment of FIG. 1, the liquid BPA may be introduced into the prill tower 10 through the BPA input unit 11.

The BPA discharge unit 12 is connected to the BPA input unit 11 and may be configured such that the liquid BPA introduced through the BPA input unit 11 is discharged. For example, the BPA discharge unit 12 may include one or more holes through which the liquid BPA may be discharged. The BPA discharge unit 12 rotates at a set RPM and may discharge the introduced liquid BPA into the body unit 13.

The body unit 13 may be configured such that liquid BPA discharged from the BPA discharge unit 12 is dropped. Specifically, the discharged liquid BPA may be cooled while falling from the upper side of the body unit 13 to the lower side.

One or more refrigerant input units 14 may be provided in the body unit 13 so that external refrigerant is introduced into the body unit 13. Specifically, the refrigerant is a cooling gas capable of lowering the temperature of the liquid BPA, and for example, air, nitrogen, noble gases, or a combination thereof may be applied.

The liquid BPA falling from the upper side of the body unit 13 to the lower side comes into contact with the refrigerant introduced through the refrigerant input unit 14, so the temperature is lowered, and the liquid BPA whose temperature is lowered may be solidified. Through this solidification process, BPA prills may be formed from the liquid BPA. In addition, during the liquid BPA solidification process, fine particles and dust may be generated due to collisions between the formed BPA prills and the inside of the prill tower 10 or between the BPA prills. Here, the BPA prills, the fine particles, and the dust may be classified according to particle sizes. More specifically, the BPA prill, the fine particles and the dust may be classified according to preset particle sizes, respectively.

The dust may be introduced into the dust filter 20 through the dust output unit 16, based on the refrigerant introduced through the refrigerant input unit 14 and the difference between the internal pressure of the body unit 13 and the internal pressure of the dust filter 20.

On the other hand, the BPA prills and the fine particles generated from the liquid BPA have relatively larger particle size and greater weight than the dust, so they are not introduced into the dust output unit 16 but be stacked on the lower side of the body unit 13 due to the introduced refrigerant and the pressure difference between the body unit 13 and the dust filter 20. That is, the BPA prills and the fine particles generated from the liquid BPA may be located at the lower side of the body unit 13.

The BPA output unit 15 is provided at the lower side of the body unit 13, and the BPA output unit 15 may be configured to output the BPA prills and the fine particles located at the lower side of the body unit 13 to the outside. For example, the BPA output unit 15 may be configured as a conveyor capable of outputting the BPA prills and the fine particles to the outside.

The dust output unit 16 is provided at the upper side of the body unit 13, and may be configured to connect the inside of the body unit 13 and the dust filter 20. The dust generated inside the body unit 13 may be introduced into the dust filter 20 through the dust output unit 16.

In some cases, the dust may be output to the outside of the prill tower 10 through the BPA output unit 15, but hereinafter, the dust will be described as being introduced into the dust filter 20 through the dust output unit 16.

For example, dust may be generated in the process of solidifying the liquid BPA discharged from the BPA discharge unit 12. In addition, dust may be generated when the generated BPA prills and/or the fine particles collide with the lower side of the body unit 13. In addition, dust may be generated when the BPA prills and/or the fine particles stacked on the lower side of the body unit 13 collide with each other in the process of being outputted to the outside through the BPA output unit 15. The dust generated inside the body unit 13 as above may be introduced into the dust filter 20 through the dust output unit 16 by the refrigerant introduced through the refrigerant input unit 14 and/or the internal pressure difference between the body unit 13 and the dust filter 20.

The dust filter 20 may include a bag filter 21 and a dust box 22.

The bag filter 21 may be configured to receive the dust passing through the dust output unit 16. A sensing unit 23 for measuring the amount of oxygen and the amount of static electricity may be provided in the bag filter 21.

The dust box 22 may be configured such that the dust introduced into the bag filter 21 is stacked. For example, the dust box 22 may be configured to be detachably mounted to the bag filter 21. Accordingly, when the dust is stacked in the dust box 22 at a predetermined rate or more, the dust box 22 mounted to the bag filter 21 is retrieved, and a new dust box 22 or a cleaned dust box 22 may be mounted to the bag filter 21 again.

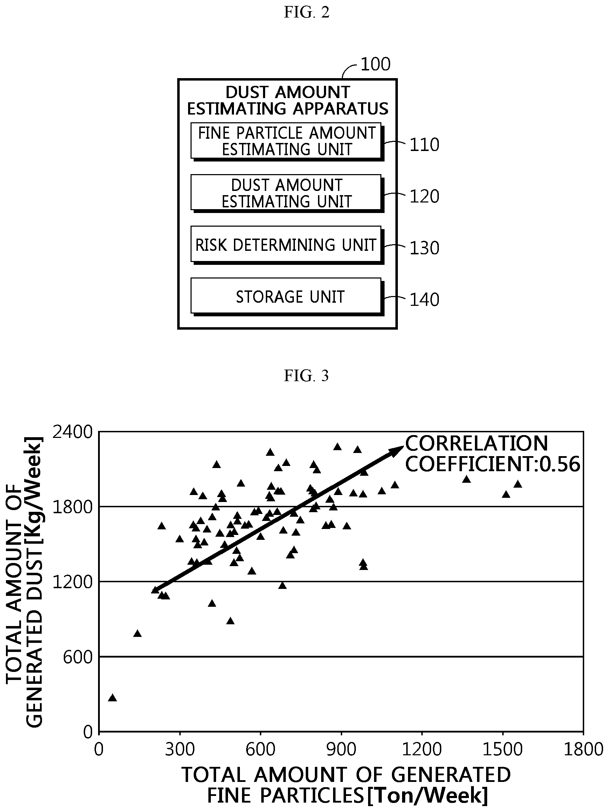

FIG. 2 is a diagram schematically showing a dust amount estimating apparatus 100 according to an embodiment of the present disclosure.

The dust amount estimating apparatus 100 according to an embodiment of the present disclosure may be configured to estimate the amount of dust generated in a processing process for generating BPA prills from the liquid BPA introduced into the prill tower 10.

For example, in the embodiment of FIG. 1, the dust amount estimating apparatus 100 may estimate the amount of dust generated from the liquid BPA introduced into the prill tower 10. Specifically, the dust amount estimating apparatus 100 may estimate the amount of dust introduced from the prill tower 10 into the bag filter 21.

Referring to FIG. 2, the dust amount estimating apparatus 100 according to an embodiment of the present disclosure may include a fine particle amount estimating unit 110 and a dust amount estimating unit 120.

The fine particle amount estimating unit 110 may be configured to estimate the amount of fine particles generated in the processing process from flow rate information of the liquid BPA introduced into the prill tower 10 using a learned fine particle amount estimating model.

Here, the flow rate information of the liquid BPA may be information on the flow rate of the liquid BPA introduced into the body unit 13 from the outside through the BPA input unit 11.

The fine particle amount estimating model may be pre-learned to estimate the amount of fine particles that are capable of being generated from the liquid BPA, based on the flow rate information of the liquid BPA introduced into the prill tower 10 and a preset fine particle amount generation rate under process conditions. Here, the fine particle amount generation rate may be preset to indicate the corresponding relationship between the amount of liquid BPA and the amount of fine particles generated from the liquid BPA.

For example, the particle size generated in the BPA prill processing process may be classified into 0.15 mm or less, greater than 0.15 mm and 0.5 mm or less, greater than 0.5 mm and 0.85 mm or less, greater than 0.85 mm and 2 mm or less, or greater than 2 mm. In general, if the particle size is 0.15 mm or less, the particle is classified as a fine particle, and the rest may be classified as a BPA prill.

That is, the fine particle amount generation rate may be preset as a ratio of the amount of generated fine particles to the total amount of liquid BPA introduced into the prill tower 10 in the course of the experiment. In addition, based on the fine particle amount generation rate, the fine particle amount estimating model may be learned to output the amount of fine particles (fine particle amount) that are capable of being generated when the information on the amount of liquid BPA is input. Accordingly, the fine particle amount estimating unit 110 may estimate the amount of fine particles corresponding to the flow rate information of the liquid BPA currently introduced into the prill tower 10 using the learned fine particle amount estimating model.

The dust amount estimating unit 120 may be communicatively connected to the fine particle amount estimating unit 110.

The dust amount estimating unit 120 may be configured to estimate the amount of dust generated in the processing process from the amount of fine particles estimated by the fine particle amount estimating unit 110 using the learned dust amount estimating model.

The dust amount estimating model may be pre-learned to estimate the amount of dust from the estimated amount of fine particles, based on a preset correlation between the amount of fine particles and the amount of dust. Here, the preset correlation between the amount of fine particles and the amount of dust may be set in advance based on the corresponding relationship between the amount of fine particles and the amount of dust generated from the liquid BPA.

For example, the correlation between the amount of fine particles and the amount of dust may be a value previously set through experiments. Specifically, the amount of fine particles and the amount of dust generated at each predetermined period may be obtained, and a correlation between the amount of fine particles and the amount of dust may be set based on the amount of fine particles and the amount of dust obtained at each period. That is, the dust amount estimating unit 120 may calculate the amount of dust, which is estimated to be generated in the processing process, from the amount of fine particles, which is estimated to be generated in the processing process by the fine particle amount estimating unit 110, based on the preset correlation between the amount of fine particles and the amount of dust.

FIG. 3 is a diagram schematically showing the amount of fine particles and the amount of dust generated from the liquid BPA.

The embodiment of FIG. 3 may be experimental data obtained by measuring the total amount of fine particles and the total amount of dust generated each week. In the embodiment of FIG. 3, the total amount of generated fine particles is a value obtained by measuring the amount of fine particles generated from the liquid BPA through the prill tower 10 at weekly intervals. In addition, the total amount of generated dust is a value obtained by measuring the amount of dust stored in the dust box 22 at weekly intervals. In addition, the total amount of generated fine particles and the total amount of generated dust measured in the same week may be mapped to each other and displayed as respective points (▲) in FIG. 3.

For example, the correlation between the amount of fine particles and the amount of dust may be set as a ratio of the total amount of generated dust to the total amount of generated fine particles. For example, in the embodiment of FIG. 3, the correlation may be set based on the ratio of the total amount of generated dust to the total amount of generated fine particles. Preferably, the maximum ratio or average ratio of the total amount of generated dust to the total amount of generated fine particles may be set as the correlation. More preferably, since dust may act as an ignition source, an accident that may occur in the dust filter 20 may be detected in advance as the amount of dust is estimated to be large. Therefore, the correlation between the amount of fine particles and the amount of dust may be set to the maximum ratio of the total amount of generated dust to the total amount of generated fine particles.

As another example, the correlation between the amount of fine particles and the amount of dust may be set as a correlation coefficient between the amount of generated fine particles and the amount of generated dust. For example, in the embodiment of FIG. 3, the correlation coefficient may be calculated through the covariance of the total amount of generated fine particles and the total amount of generated dust. Specifically, when X is set to the total amount of generated fine particle and Y is set to the total amount of generated dust, the corresponding relationship between the total amount of generated fine particle and the total amount of generated dust may be expressed as an X-Y graph as in the embodiment of FIG. 3. In addition, the correlation coefficient may be calculated based on the variance between the total amounts of generated fine particles, the variance between the total amounts of generated dust, and the covariance between the total amount of generated fine particles and the total amount of generated dust. In the embodiment of FIG. 3, the correlation coefficient between the total amount of generated fine particles and the total amount of generated dust may be 0.56.

That is, the correlation between the amount of fine particles and the amount of dust may be preset based on the amount of fine particles and the amount of dust generated during the experiment. In addition, based on this correlation, the dust amount estimating model may be learned to estimate the amount of dust (dust amount) that is capable of being generated when the information on the amount of fine particles is input. Accordingly, the dust amount estimating unit 120 may estimate the amount of dust, which is expected to be generated in the processing process, from the amount of fine particles, which is estimated by the fine particle amount estimating unit 110, using the learned dust amount estimating model.

The dust amount estimating apparatus 100 according to an embodiment of the present disclosure may estimate the amount of dust generated in the BPA prill processing process even without an additional sensor for measuring the amount of dust. In addition, the dust amount estimating apparatus 100 may estimate the amount of dust generated in the BPA prill processing process in real time without measuring the amount of dust stored in the dust filter 20 ex post facto. Therefore, the dust amount estimating apparatus 100 has an advantage of detecting in advance a dangerous situation in which a fire or explosion occurs in the bag filter 21 by estimating the amount of dust in real time.

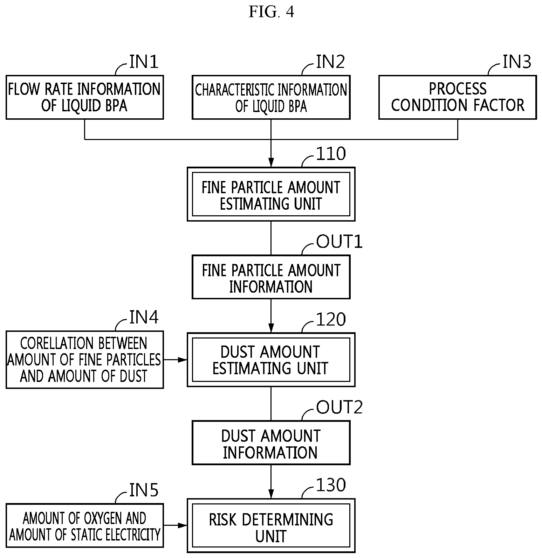

FIG. 4 is a diagram schematically showing an operating configuration of the dust amount estimating apparatus 100 according to an embodiment of the present disclosure.

The fine particle amount estimating model may be pre-learned to estimate the amount of fine particles by further considering at least one of the characteristic information of the liquid BPA introduced into the prill tower 10 and the process condition factor of the prill tower 10.

That is, the fine particle amount estimating model may be learned by further considering the flow rate information of the liquid BPA as well as at least one of the characteristic information of the liquid BPA and the process condition factor of the prill tower 10.

Here, the characteristic information of the liquid BPA may be configured to include at least one of temperature information and composition information of the liquid BPA.

In addition, the process condition factor may be configured to include at least one of the speed at which the liquid BPA introduced into the prill tower 10 is injected into the prill tower 10, the speed at which the BPA prills and the fine particles generated in the processing process are output from the prill tower 10 to the outside, the amount of refrigerant introduced into the prill tower 10, the temperature of the refrigerant, the internal temperature of the prill tower 10, and the pressure difference between the dust filter 20 in which the dust is stored and the inside of the prill tower 10.

The fine particle amount estimating unit 110 may determine a fine particle amount generation rate corresponding to at least one of the characteristic information of the liquid BPA and the process condition factor of the prill tower 10. Preferably, the fine particle amount estimating unit 110 may determine a corresponding fine particle amount generation rate by considering both the characteristic information of the liquid BPA and the process condition factor of the prill tower 10.

For example, a plurality of fine particle amount generation rates may be set to correspond to the characteristic information of the liquid BPA and the process condition factor of the prill tower 10, and the fine particle amount estimating unit 110 may determine any one of the plurality of fine particle amount generation rates. In addition, the fine particle amount estimating unit 110 may estimate the amount of fine particles from the flow rate information of the liquid BPA introduced into the prill tower 10 using the fine particle amount learning model to which the determined fine particle amount generation rate is applied.

In the embodiment of FIG. 4, the flow rate information IN1 of the liquid BPA, the characteristic information IN2 of the liquid BPA, and the process condition factor IN3 may be input to the fine particle amount estimating unit 110. The fine particle amount estimating unit 110 may input the input flow rate information IN1 of the liquid BPA, the input characteristic information IN2 of the liquid BPA, and the input process condition factor IN3 into the fine particle amount estimating model. In addition, the fine particle amount estimating unit 110 may output the result output from the fine particle amount estimating model as fine particle amount information OUT1 estimated to be generated in the processing process.

In addition, the fine particle amount information output from the fine particle amount estimating unit 110 may be input to the dust amount estimating unit 120.

In the embodiment of FIG. 4, the dust amount estimating unit 120 may receive the fine particle amount information OUT1 output from the fine particle amount estimating unit 110, and input the received fine particle amount information OUT1 and the correlation IN4 between the preset fine particle amount and the amount of dust into the dust amount estimating model. In addition, the dust amount estimating unit 120 may output the result output from the dust amount estimating model as dust amount information OUT2 estimated to be generated in the processing process.

That is, the dust amount estimating apparatus 100 according to an embodiment of the present disclosure has an advantage of estimating in real time the amount of dust expected to be generated in the BPA prill processing process, based on at least one of the flow rate, temperature, and composition information of the liquid BPA introduced into the prill tower 10 and the operating condition factor of the prill tower 10.

Hereinafter, factors input to the fine particle amount estimating model to estimate the amount of fine particles based on the liquid BPA phase transition process in the BPA prill processing process will be described. Specifically, the composition of the liquid BPA, the temperature of the liquid BPA, and the process condition factor of the prill tower 10 are described.

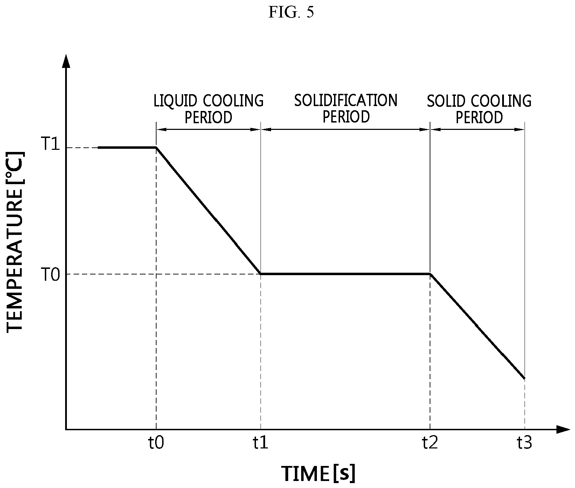

FIG. 5 is a diagram schematically showing a phase transition process of the liquid BPA in a BPA prill processing process. Specifically, the embodiment of FIG. 5 is a diagram showing a standard process for generating solid BPA (BPA prills, fine particles and dust) from the liquid BPA.

In the embodiment of FIG. 5, at time t0, the liquid BPA of temperature T1 may be discharged from the BPA discharge unit 12.

Time t0 to t1 may be a liquid cooling period. In the liquid cooling period, the liquid BPA may be cooled by the temperature difference with the inside of the body unit 13 and the temperature difference with the refrigerant introduced into the body unit 13 through the refrigerant input unit 14. The temperature of the liquid BPA cooled at time t1 may be T0.

Time t1 to t2 may be a solidification period. In the solidification period, the cooled liquid BPA may solidify. That is, temperature T0 may be a freezing point of the liquid BPA.

For example, a phase transition may occur in the liquid BPA cooled to the temperature T0 through the liquid cooling period, so that the liquid BPA may be solidified in the solidification region. Specifically, BPA prills, fine particles, and dust may be generated from the liquid BPA in the solidification period.

In addition, a solid cooling period may be present after time t2. The solid BPA generated through the solidification period may be cooled in the solid cooling period.

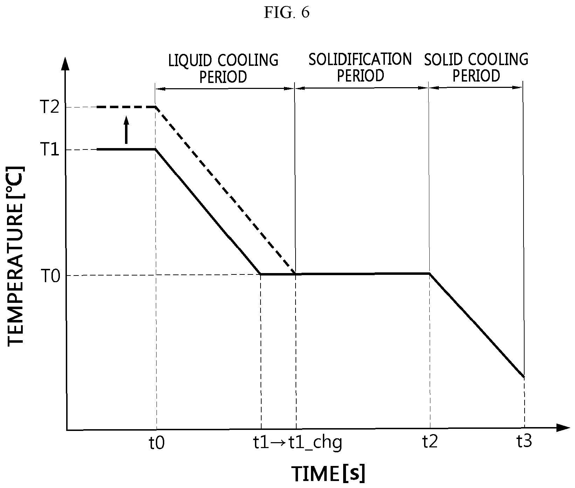

FIG. 6 is a diagram schematically showing a phase transition process of the liquid BPA when the temperature of the liquid BPA in FIG. 5 is changed. Specifically, FIG. 6 is a diagram schematically showing a phase transition process of the liquid BPA, when the temperature of the liquid BPA introduced into the prill tower 10 is T2 greater than T1. That is, the embodiment of FIG. 6 is an embodiment for the case where the temperature of the liquid BPA is increased.

In the embodiment of FIG. 6, when the temperature of the liquid BPA introduced into the prill tower 10 is increased to T2, the length of the liquid cooling period may be longer than the length of the liquid cooling period of FIG. 5.

Referring to FIGS. 5 and 6, in the embodiment of FIG. 6, only the temperature of the liquid BPA is changed, and since the composition of the liquid BPA and the process condition factor of the prill tower 10 are the same as in the embodiment of FIG. 5, the cooling rate for the liquid BPA in the liquid cooling period may be the same in the embodiments of FIGS. 5 and 6.

However, since the temperature of the liquid BPA is increased to T2, the temperature of the liquid BPA may reach the freezing point at the time of t1_chg. In this case, the solidification period may be a time from t1_chg to t2. That is, the solidification period of the embodiment of FIG. 6 may be reduced by "t1_chg - t1" compared to the solidification period of the embodiment of FIG. 5.

That is, in the embodiment of FIG. 6, the solidification time of the liquid BPA may decrease as the temperature of the liquid BPA increases. In this case, since the liquid BPA can be solidified only for a short period of time, the particles of the generated solid BPA in the embodiment of FIG. 6 may be smaller than the particles of the generated solid BPA in the embodiment of FIG. 5. This means that in the embodiment of FIG. 6, a greater amount of fine particles can be generated than in the embodiment of FIG. 5.

Therefore, referring to FIGS. 5 and 6, since the temperature of the liquid BPA is a factor that can affect the amount of fine particles, the fine particle amount estimating unit 110 may estimate the amount of generated fine particles by considering the temperature of the liquid BPA.

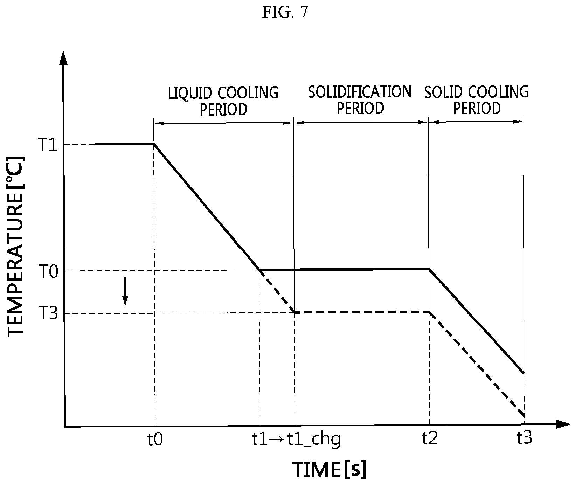

FIG. 7 is a diagram schematically showing a phase transition process of the liquid BPA when the composition of the liquid BPA in FIG. 5 is changed. Specifically, FIG. 7 is a diagram schematically showing a phase transition process of the liquid BPA, when the composition of the liquid BPA introduced into the prill tower 10 is different from the composition of the liquid BPA according to the embodiment of FIG. 5. That is, the embodiment of FIG. 7 is an embodiment for the case in which the composition of the liquid BPA among the process condition factors is changed.

In the embodiment of FIG. 7, when the composition of the liquid BPA introduced into the prill tower 10 is changed, the length of the liquid cooling period may be longer than the length of the liquid cooling period of FIG. 5.

Referring to FIGS. 5 and 7, in the embodiment of FIG. 7, only the composition of the liquid BPA is changed, and since the temperature of the liquid BPA and the process condition factor of the prill tower 10 are the same as in the embodiment of FIG. 5, the cooling rate for the liquid BPA in the liquid cooling period may be the same in the embodiments of FIGS. 5 and 7.

However, since the composition of the liquid BPA is changed in the embodiment of FIG. 7, the temperature of the liquid BPA may reach the freezing point at the time t1_chg. That is, since the freezing point of a mixture is lower than the freezing point of a pure material, the freezing point of the liquid BPA in FIG. 7 may be lower than the freezing point of the liquid BPA in FIG. 5. In addition, since the cooling rates in FIGS. 5 and 7 are the same, the freezing point of the liquid BPA in FIG. 7 may be lowered to T3. In this case, the solidification period may be a time from t1_chg to t2. That is, the solidification period of the embodiment of FIG. 7 may be reduced by "t1_chg - t1" compared to the solidification period of the embodiment of FIG. 5.

That is, in the embodiment of FIG. 7, the solidification time of the liquid BPA may be reduced as the composition of the liquid BPA is changed. In this case, since the liquid BPA may be solidified only for a short period of time, the particles of the generated solid BPA in the embodiment of FIG. 7 may be smaller than the particles of the generated solid BPA in the embodiment of FIG. 5. This means that in the embodiment of FIG. 7, a greater amount of fine particles can be generated than in the embodiment of FIG. 5.

Therefore, referring to FIGS. 5 and 7, since the composition of the liquid BPA is a factor that can affect the amount of fine particles, the fine particle amount estimating unit 110 may estimate the amount of generated fine particles by considering the composition of the liquid BPA.

In addition, when the temperature of the liquid BPA and/or the process condition factor of the prill tower 10 is changed, the cooling rate of the liquid BPA may be changed.

In the embodiment of FIG. 5, when the temperature of the liquid BPA and/or the process condition factor of the prill tower 10 is changed, the cooling rate of the liquid BPA in the liquid cooling period may be changed. The change in the cooling rate may affect the time during which the liquid BPA reaches the freezing point, as well as affect its solidification mechanism.

For example, when the cooling rate is increased, a large number of nuclei are generated in the liquid BPA, and the size of the BPA prills formed through growth after nucleation may decrease, or the size of grains constituting the BPA prills may decrease. That is, since the change in the solidification mechanism according to the increase in the cooling rate may weaken the strength of the BPA prills, fine particles and/or dust may be additionally generated due to collisions that occur after the solidification process of the liquid BPA. Accordingly, the fine particle amount estimating unit 110 may estimate the amount of fine particles by further considering the temperature of the liquid BPA and the process condition factor of the prill tower 10.

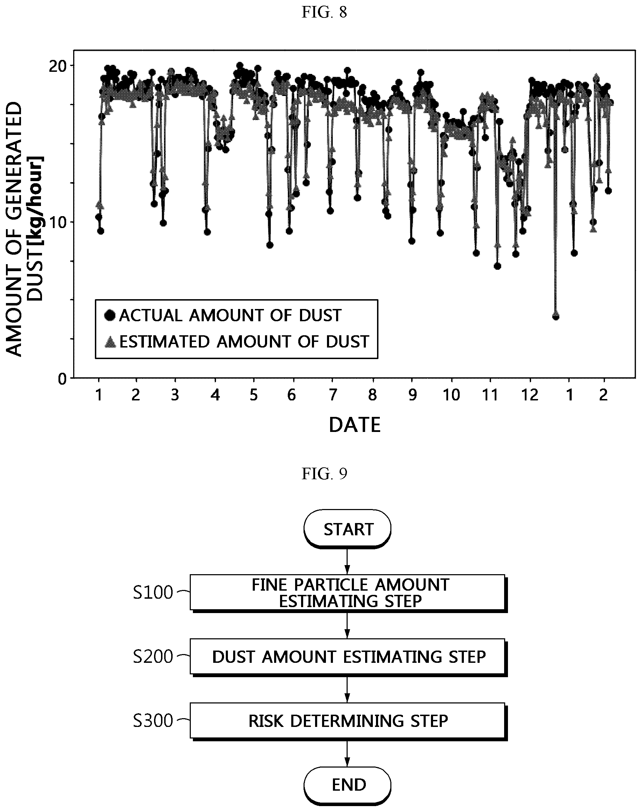

FIG. 8 is a diagram schematically showing the amount of dust estimated by the dust amount estimating apparatus 100 according to an embodiment of the present disclosure.

Specifically, FIG. 8 is a diagram comparatively showing the amount of dust actually generated (•) and the estimated amount of dust (▲) during a predetermined period (13 months) by the dust amount estimating unit 120.

The dust amount estimating unit 120 may estimate the amount of dust generated from the liquid BPA by considering the fine particle amount information received from the fine particle amount estimating unit 110 and the correlation between the amount of fine particles and the amount of dust. Accordingly, referring to FIG. 8, it can be seen that the amount of dust estimated by the dust amount estimating unit 120 is similar to the amount of actually generated dust.

In particular, it can be seen that the amount of dust estimated by the dust amount estimating unit 120 is accurately estimated even when the amount of actually generated dust tends to decrease rapidly. Therefore, the dust amount estimating unit 120 may estimate the amount of dust generated in the BPA prill processing process with high accuracy from the estimated amount of fine particles.

Meanwhile, the fine particle amount estimating unit 110, the dust amount estimating unit 120 and the risk determining unit 130 included in the dust amount estimating apparatus 100 may selectively include processors known in the art, application-specific integrated circuit (ASIC), other chipsets, logic circuits, registers, communication modems, data processing devices, and the like to execute various control logic performed in the present disclosure.

In addition, the dust amount estimating apparatus 100 may further include a storage unit 140. The storage unit 140 may store data necessary for operation and function of each component of the dust amount estimating apparatus 100, data generated in the process of performing the operation or function, or the like. The storage unit 140 is not particularly limited in its kind as long as it is a known information storage means that can record, erase, update and read data. As an example, the information storage means may include RAM, flash memory, ROM, EEPROM, registers, and the like. In addition, the storage unit 140 may store program codes in which processes executable by the fine particle amount estimating unit 110, the dust amount estimating unit 120 and the risk determining unit 130 are defined.

For example, the storage unit 140 may store the fine particle amount estimating model, the fine particle amount generation rate, the dust amount estimating model, and the correlation between the amount of dust and the amount of fine particles.

Meanwhile, referring to FIG. 2, the dust amount estimating apparatus 100 according to an embodiment of the present disclosure may further include a risk determining unit 130.

The risk determining unit 130 may be configured to diagnose the state of the dust filter 20 based on the amount of oxygen and the amount of static electricity of the dust filter 20 in which the dust generated in the processing process is stored and the amount of dust estimated by the dust amount estimating unit 120.

For example, in the embodiment of FIG. 1, the risk determining unit 130 may be communicatively connected to the sensing unit 23. Also, the risk determining unit 130 may be communicatively connected to the dust amount estimating unit 120.

Referring to FIG. 4, the risk determining unit 130 may diagnose the state of the dust filter 20 based on the amount of oxygen and the amount of static electricity IN5 of the bag filter 21 received from the sensing unit 23 and the dust amount information OUT2 received from the dust amount estimating unit 120.

Specifically, the risk determining unit 130 may determine the state of the dust filter 20 as a normal state or an abnormal state.

Here, the normal state may mean a state in which the amount of oxygen, the amount of static electricity, and the amount of dust are included in normal ranges, and there is no risk of fire or explosion in the dust filter 20. Also, the abnormal state may mean a state in which at least one of the amount of oxygen, the amount of static electricity, and the amount of dust is not included in a normal range.

According to an embodiment of the present disclosure, the abnormal state may include a warning state and a dangerous state. The warning state may mean a state in which at least one of the amount of oxygen, the amount of static electricity, and the amount of dust is out of the normal range, but the possibility of fire or explosion in the dust filter 20 is low. That is, the warning state is a state in which at least one of the amount of oxygen, the amount of static electricity, and the amount of dust is slightly beyond the normal range, and even though the state of the dust filter 20 is not in a normal state, the risk of fire or explosion is low.

Conversely, the dangerous state may mean a state in which at least one of the amount of oxygen, the amount of static electricity, and the amount of dust is out of the normal range, and there is a possibility of fire or explosion in the dust filter 20. That is, the dangerous state may be a state in which the dust filter 20 is not in a normal state and the risk of fire or explosion is high.

For example, the normal range, the warning range, and the danger range may be preset for each of the amount of oxygen, the amount of static electricity, and the amount of dust. In addition, if the amount of oxygen, the amount of static electricity, and the amount of dust all fall within the corresponding normal ranges, the risk determining unit 130 may determine the state of the dust filter 20 as a normal state.

As another example, if at least one of the amount of oxygen, the amount of static electricity, and the amount of dust falls within a corresponding warning range, the risk determining unit 130 may determine the state of the dust filter 20 as an abnormal state (specifically, a warning state).

As another example, if at least one of the amount of oxygen, the amount of static electricity, and the amount of dust falls within the corresponding risk range, the risk determining unit 130 may determine the state of the dust filter 20 as an abnormal state (specifically, a dangerous state).

In the above, the abnormal state is classified only as a warning state and a dangerous state, but the abnormal state may be further subdivided according to the possibility of fire or explosion in the dust filter 20. That is, the range of states corresponding to the amount of oxygen, the amount of static electricity, and the amount of dust may be further subdivided in addition to the normal state, the warning state, and the dangerous state.

The risk determining unit 130 may be configured to output a warning notification when the determined state of the dust filter 20 is an abnormal state.

For example, the risk determining unit 130 may output a warning notification along with the determined state of the dust filter 20 to an external display, a user terminal, and/or a central control server.

In addition, the user and/or server may temporarily stop the BPA prill processing process according to the warning notification received from the risk determining unit 130 in order to prevent fire and/or explosion from occurring in the dust filter 20. For example, when the state of the dust filter 20 determined by the risk determining unit 130 is an abnormal state (particularly, a dangerous state), the BPA prill processing process may be temporarily suspended.

The dust amount estimating apparatus 100 according to an embodiment of the present disclosure may estimate the amount of dust generated in the BPA prill processing process in real time. Therefore, the dust amount estimating apparatus 100 has an advantage of preventing unexpected accidents such as fire and/or explosion from occurring in the BPA prill processing process, or promptly notifying the occurrence of such accidents to the outside.

Meanwhile, the dust amount estimating apparatus 100 according to an embodiment of the present disclosure may be included in a BPA prill manufacturing apparatus.

For example, referring to FIGS. 1 and 2, the BPA prill manufacturing apparatus may include a prill tower 10, a dust filter 20, and a dust amount estimating apparatus 100.

In the embodiment of FIG. 4, the dust amount estimating apparatus 100 may receive the flow rate information IN1 of the liquid BPA introduced through the BPA input unit 11, the characteristic information IN2 of the liquid BPA, and the process condition factor IN3 of the prill tower 10 from the outside. Also, the dust amount estimating apparatus 100 may be communicatively connected to the sensing unit 23 provided in the bag filter 21 to receive the amount of oxygen and the amount of static electricity IN5 from the sensing unit 23.

In addition, the dust amount estimating apparatus 100 may estimate the amount of dust included in the bag filter 21 in real time in the process of generating BPA prills by the BPA prill manufacturing apparatus. Therefore, since the BPA prill manufacturing apparatus may check the possibility of fire and/or explosion of the dust filter 20 in real time, it has an advantage of generating BPA prills more safely.

FIG. 9 is a diagram schematically showing a dust amount estimating method according to another embodiment of the present disclosure.

Preferably, each step of the dust amount estimating method may be performed by the dust amount estimating apparatus 100. Hereinafter, for convenience of explanation, contents overlapping with the previously described contents will be omitted or briefly described.

The dust amount estimating method is a method of estimating the amount of dust generated in the processing process in which BPA prills are generated from the liquid BPA introduced into the prill tower 10.

Referring to FIG. 9, the dust amount estimating method may include a fine particle amount estimating step (S 100) and a dust amount estimating step (S200).

The fine particle amount estimating step (S100) is a step of estimating the amount of fine particles generated in the processing process from the flow rate information of the liquid BPA introduced into the prill tower 10 using the learned fine particle amount estimating model, and may be performed by the estimating unit 110.

For example, the fine particle amount estimating unit 110 may estimate the amount of fine particles, which is expected to be generated, from the flow rate information of the liquid BPA introduced into the prill tower 10 in real time.

In the embodiment of FIG. 4, the fine particle amount estimating unit 110 may generate the fine particle amount information from the flow rate information IN1 of the liquid BPA, the characteristic information IN2 of the liquid BPA, and the process condition factor IN3.

The dust amount estimating step (S200) is a step of estimating the amount of dust generated in the processing process from the amount of fine particles estimated in the fine particle amount estimating step (S100) using the learned dust amount estimating model, and may be performed by the dust amount estimating unit 120.

For example, in the embodiment of FIG. 4, the dust amount estimating unit 120 may receive the fine particle amount information OUT 1 from the fine particle amount estimating unit 110. In addition, the dust amount estimating unit 120 may estimate the amount of dust, which is capable of being generated in the BPA prill processing process, based on the preset correlation IN4 and the fine particle amount information OUT1.

The dust amount estimating method according to another embodiment of the present disclosure has an advantage of estimating in real time the amount of dust, which is capable of being generated in the BPA prill processing process, through a non-destructive method.

Referring to FIG. 9, the dust amount estimating method may further include a risk determining step (S300).

The risk determining step (S300) is a step of diagnosing the state of the dust filter 20 based on the amount of oxygen and the amount of static electricity of the dust filter 20 in which the dust generated in the processing process is stored and the amount of dust estimated by the dust amount estimating unit 120, and may be performed by the risk determining unit 130.

For example, in the embodiment of FIG. 4, the risk determining unit 130 may receive the dust amount information OUT2 from the dust amount estimating unit 120. Also, the risk determining unit 130 may receive the amount of oxygen and the amount of static electricity IN5 from the sensing unit 23 included in the dust filter 20 (more specifically, the bag filter 21).

The risk determining unit 130 may determine the state of the dust filter 20 as a normal state or an abnormal state based on the amount of oxygen, the amount of static electricity, and the amount of dust. If the state of the dust filter 20 is determined as an abnormal state, the risk determining unit 130 may be configured to externally output a warning notification.

That is, the dust amount estimating method according to another embodiment of the present disclosure may output a warning notification to the outside when the dust filter 20 is in an abnormal state, thereby preventing accidents such as fire and/or explosion, which may occur in the dust filter 20, in advance, or notifying the occurrence of such an accident quickly to the outside.

The embodiments of the present disclosure described above may not be implemented only through an apparatus and a method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications.

### (Reference Signs)

10: prill tower
11: BPA input unit
12: BPA discharge unit
13: body unit
14: refrigerant input unit
15: BPA output unit
16: dust output unit
20: dust filter
21: bag filter
22: dust box
23: sensing unit
100: dust amount estimating apparatus
110: fine particle amount estimating unit
120: dust amount estimating unit
130: risk determining unit
140: storage unit

## Claims

1. A dust amount estimating apparatus, which estimates the amount of dust generated in a processing process for generating BPA prills from liquid BPA introduced into a prill tower, the dust amount estimating apparatus comprising:
a fine particle amount estimating unit configured to estimate the amount of fine particles generated in the processing process from flow rate information of the liquid BPA introduced into the prill tower using a learned fine particle amount estimating model; and
a dust amount estimating unit configured to estimate the amount of dust generated in the processing process from the amount of fine particles estimated by the fine particle amount estimating unit using a learned dust amount estimating model.

2. The dust amount estimating apparatus according to claim 1,
wherein the fine particle amount estimating model is pre-learned to estimate the amount of fine particles that are capable of being generated from the liquid BPA, based on the flow rate information of the liquid BPA introduced into the prill tower and a preset fine particle amount generation rate.

3. The dust amount estimating apparatus according to claim 2,
wherein the fine particle amount generation rate is preset to indicate the corresponding relationship between the amount of the liquid BPA and the amount of fine particles generated from the liquid BPA.

4. The dust amount estimating apparatus according to claim 2,
wherein the fine particle amount estimating model is pre-learned to estimate the amount of fine particles by further considering at least one of characteristic information of the liquid BPA introduced into the prill tower and a process condition factor of the prill tower.

5. The dust amount estimating apparatus according to claim 4,
wherein the fine particle amount estimating unit is configured to determine the fine particle amount generation rate corresponding to at least one of the characteristic information of the liquid BPA and the process condition factor, and estimate the amount of fine particles based on the determined fine particle amount generation rate.

6. The dust amount estimating apparatus according to claim 4,
wherein the characteristic information of the liquid BPA is configured to include at least one of temperature information and composition information of the liquid BPA.

7. The dust amount estimating apparatus according to claim 4,
wherein the process condition factor is configured to include at least one of a speed at which the liquid BPA introduced into the prill tower is injected into the prill tower, a speed at which the BPA prills and the fine particles generated in the processing process are output from the prill tower to the outside, an amount of refrigerant introduced into the prill tower in the processing process, a temperature of the refrigerant, an internal temperature of the prill tower, and a pressure difference between a dust filter in which the dust is stored and the inside of the prill tower.

8. The dust amount estimating apparatus according to claim 1,
wherein the dust amount estimating model is pre-learned to estimate the amount of dust from the estimated amount of fine particles, based on a preset correlation between the amount of fine particles and the amount of dust.

9. The dust amount estimating apparatus according to claim 8,
wherein the correlation is configured to be preset based on the corresponding relationship between the amount of fine particles and the amount of dust generated from the liquid BPA.

10. The dust amount estimating apparatus according to claim 1,
wherein the liquid BPA is configured to be introduced into the prill tower in the processing process and generate the BPA prills, the fine particles and the dust.

11. The dust amount estimating apparatus according to claim 1, further comprising:
a risk determining unit configured to diagnose the state of a dust filter based on the amount of oxygen and the amount of static electricity of the dust filter in which the dust generated in the processing process is stored and the amount of dust estimated by the dust amount estimating unit.

12. The dust amount estimating apparatus according to claim 11,
wherein the risk determining unit is configured to determine the state of the dust filter as a normal state or an abnormal state and output a warning notification when the determined state of the dust filter is the abnormal state.

13. A BPA prill manufacturing apparatus, comprising the dust amount estimating apparatus according to any one of claims 1 to 12.

14. A dust amount estimating method, which estimates the amount of dust generated in a processing process for generating BPA prills from liquid BPA introduced into a prill tower, the dust amount estimating method comprising:
a fine particle amount estimating step of estimating the amount of fine particles generated in the processing process from flow rate information and characteristic information of the liquid BPA introduced into the prill tower and a process condition factor of the prill tower using a learned fine particle amount estimating model; and
a dust amount estimating step of estimating the amount of dust generated in the processing process from the amount of fine particles estimated in the fine particle amount estimating step using a learned dust amount estimating model.
